# EUROPÄISCHE PATENTANMELDUNG

(11) **EP 2 444 653 A2**
(43) Veröffentlichungstag der Anmeldung: **25.04.2012**
(21) Anmeldenummer: 11186049.0
(22) Anmeldetag: 21.10.2011
(51) Int. Cl.: F02M 63/00

(54) **Hochdruckregelventil**

(30) Priorität: 21.10.2010 DE 102010049035
(71) Anmelder: KENDRION Binder Magnete GmbH, 78048 Villingen-Schwenningen (DE)
(72) Erfinder: Zelano, Frank, 78112 St. Georgen (DE); Burkart, Harald, 78054 Villingen-Schwenningen (DE); Maiwald, Wolfram, 78052 Villingen-Schwenningen (DE); Heingl, Ralf, 78054 Villingen-Schwenningen (DE); Hermann, Rolf, 78126 Königsfeld (DE); Schiess, Klaus, 78476 Allensbach (DE)
(74) Vertreter: Patentanwälte Westphal, Mussgnug & Partner

(57) **Zusammenfassung**

Hochdruckregelventil (1) mit einem Ventilkörper (2) mit einem Einlass (20) und einem Auslass (21), einem Dichtelement (4), das auf einen Ventilsitz (3), der an dem Ventilkörper (2) zwischen Einlass (20) und Auslass (21) angeordnet ist und eine Ventilbohrung (30) aufweist, wirkt, einem Betätigungselement (5), das entlang einer Längsachse beweglich gelagert und von einem Elektromagneten (6), der geeignet ausgebildet ist, betätigbar ist, wobeiein Anker (62) des Elektromagneten (6) und das Betätigungselement (5) als unverbundene separate Bauelemente ausgeführt sind.

## Beschreibung

Die vorliegende Erfindung betrifft ein Hochdruckregelventil gemäß dem Oberbegriff des Patentanspruchs 1.

Derartige Hochdruckregelventile sind aus dem Stand der Technik bspw. zur Druckregelung in Common-Rail Motoren bekannt.

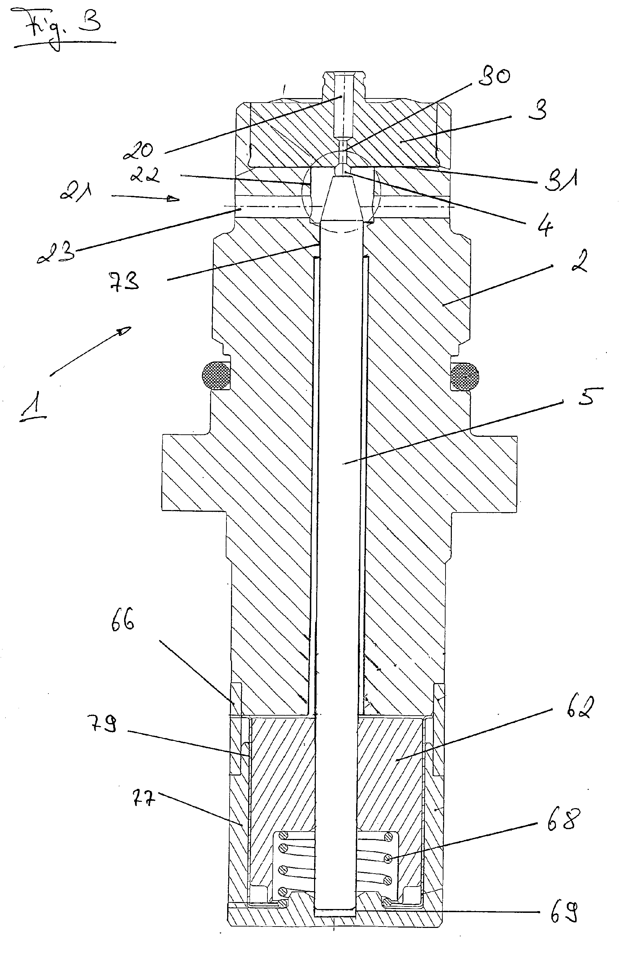

Die Hochdruckregelung von Flüssigkeiten erfolgt im Allgemeinen über Kugelsitzventile. Diese sind in der Regel elektromagnetisch angesteuert. Elektromagnetisch betriebene Hochdruckregelventile aus dem Stand der Technik sind im Allgemeinen wie folgt aufgebaut, ein Beispiel ist in Figur 3 dargestellt.

Das Hochdruckregelventil 1 weist einen Ventilkörper 2 mit einem Einlass 20 und einem Auslass 21 auf, wobei einlassseitig bspw. im Anwendungsbereich der Common-Rail Motoren derzeit Drücke bis zu 2400 bar anstehen. Zwischen dem Einlass 20 und dem Auslass 21 ist ein Ventilsitz 3 angeordnet, durch den eine Ventilbohrung 30, die Einlass 20 und Auslass 21 verbindet, geführt ist. Die Ventilbohrung 30 ist auslassseitig durch ein Dichtmittel 4, das in der Regel als Dichtkugel ausgeführt ist, abdichtbar. Die Dichtkugel 4 ist dazu über einen Ventilstift 5 gegen den Ventilsitz 3 pressbar. Der Ventilsitz 3 ist aufgrund der erhöhten Belastungen, die durch die Dichtkugel 4 einwirken, aus gehärtetem Stahl gefertigt. Aus Kostengründen ist der restliche Ventilkörper 2 aus ungehärtetem Material gefertigt.

Der Auslass 21 ist durch radiale Bohrungen 23 auf der Auslassseite des Ventilkörpers 2 gebildet. Um eine möglichst kompakte Bauform des Ventils 1 zu erreichen sind die radialen Bohrungen 23 möglichst knapp unterhalb des Ventilsitzes 3 angeordnet. Durch diese Bauart ist zwischen dem Ventilsitz 3 und den Auslassbohrungen 23 ein Absatz 22 gebildet, der die notwendigen Kräfte für eine Verspannung des Ventilsitzes 3 beim Einbau des Ventils 1 überträgt.

Der Ventilstift 5 ist über eine auslassseitig angeordnete elektromagnetische Antriebseinheit 6 entlang seiner Längsachse bewegbar. Die Antriebseinheit 6 ist in der Regel aus einer auf einem Spulenträger 60 angeordneten bestrombaren Spule 61 und einem durch ein erzeugtes Magnetfeld betätigbaren Anker 62 aufgebaut. Der Anker 62 und der Ventilstift 5 sind miteinander verschweißt oder verpresst und so feststehend miteinander verbunden. Der Anker 62 ist außerdem in Schließrichtung des Ventils 1 mittels einer Druckfeder 68 vorgespannt, sodass das Ventil 1 in unbestromtem Zustand der Spule 61 geschlossen ist.

Der Anker 62 und die Druckfeder 68 sind Rückseitig in einer Buchse 77, die an dem Ventilkörper 2 bspw. über einen Schweißring 66 befestigt ist, gelagert. Der Ventilstift 5 ist in der Buchse 77 über eine Lagerbuchse 69 relativ zu der Buchse 77 zentriert gehalten. Der Ventilstift 5 ist in einer Längsbohrung des Ventilkörpers 2 aufgenommen.

In dieser Längsbohrung ist er vorderseitig über ein durch einen umlaufenden Vorsprung des Ventilkörpers 2 gebildetes Lager 73 zentriert. Sämtliche Lagerbauteile müssen hochpräzise gefertigt sein und mit der auslassseitigen Öffnung der Ventilbohrung 30, die als weiteres Lager anzusehen ist, fluchten. Durch die Aneinanderreihung von insgesamt 3 Lagern ist das mechanische System aus Anker 62, Ventilstift 5, Ventilkörper 2 und Ventilsitz 3 statisch überbestimmt, sodass, sobald eine Flucht nicht eingehalten wird Radialkräfte auf die Dichtkugel 4 auftreten, die zur Leckage des Ventils 1 oder einem Verklemmen des Ventilstifts 5 bzw. des Ankers 62 führen.

Andere aus dem Stand der Technik bekannte Hochdruckregelventile 1 weisen bspw. einen asymmetrischen Anker 62 auf, der schon aufgrund seiner Geometrie ein Kippmoment in das System aus Anker 62 und Ventilstift 5 einbringt. Bei diesem bekannten Ventil können also selbst bei präziser Lagerung Probleme, beispielsweise ein Verklemmen des Ankers 62 oder des Ventilstifts 5, auftreten.

Es sind außerdem Hochdruckregelventile 1 bekannt, bei denen eine Lagerung des fest verbundenen Systems aus Anker 62 und Ventilstift 5 ausschließlich über eine Führung des Ventilstiftes 5 in einer Längsbohrung des Ventilkörpers 2 erfolgt.' Bei diesem bekannten Ventil 1 können durch eine asymmetrische Krafteinwirkung auf den Anker 62, beispielsweise aufgrund mangelnder Orthogonalität zwischen Anker und Ventilstift 5, Kippmomente eingebracht werden, die dann auf den Ventilstift 5 wirken. Es ist außerdem nicht möglich, den Anker 62 präzise zu Lagern und dadurch eine Dämpfung des Systems einzustellen.

Es ist die Aufgabe der vorliegenden Erfindung, ein Hochdruckregelventil zur Verfügung zu stellen, das die vorstehend beschriebenen Probleme nicht aufweist.

Diese Aufgabe wird gelöst durch ein Hochdruckregelventil mit den Merkmalen des Patentanspruchs 1. Vorteilhafte Weiterbildungen sind Gegenstand von Unteransprüchen.

Ein erfindungsgemäßes Hochdruckregelventil weist einen Ventilkörper mit einem Einlass und einem Auslass auf, wobei ein Dichtelement, das auf einen Ventilsitz, der an dem Ventilkörper zwischen Einlass und Auslass angeordnet ist und eine Ventilbohrung aufweist, wirkt. Es ist ein Betätigungselement vorgesehen, das entlang seiner Längsachse beweglich gelagert und von einem Elektromagneten, der geeignet ausgebildet ist, betätigbar ist. Erfindungsgemäß sind ein Anker des Elektromagneten und das Betätigungselement als unverbundene separate Bauelemente ausgeführt.

Durch eine derartige Ausgestaltung wird eine Entkopplung zwischen Betätigungselement und Elektromagnet erreicht, sodass fertigungstechnische Fehler im Bereich des Elektromagneten beziehungsweise im Verbindungsbereich zwischen Elektromagnet und Ventilkörper nicht auf das Betätigungselement übertragen werden. Es wird außerdem erreicht, dass ein hochexaktes Fluchten nur zwischen einer Lagerung des Betätigungselements und der Ventilbohrung notwendig wird, sodass insbesondere die Fluchtung zwischen dem Anker und dem Ventilkörper erhöhte Toleranzen aufweisen kann. Da der Ventilsitz mit der Ventilbohrung sowie eine Längsbohrung in dem Ventilkörper, die als Gleitlager für das Betätigungselement dient, in einem Arbeitsgang hergestellt werden, kann dieses System mit geringen Toleranzen gefertigt werden, sodass auch bei statischer Überbestimmung des Systems keine negativen Effekte zu erwarten sind.

Eine besonders einfache Lagerung des Betätigungselements kann in einer Längsbohrung des Ventilkörpers erreicht werden, wenn das Betätigungselement als Ventilstift ausgeführt ist.

Wenn der Anker und das Betätigungselement als unverbundene separate Bauteile ausgeführt sind, ist es außerdem möglich, den Anker und das Betätigungselement separat zu lagern. Auf diese Weise kann erreicht werden, dass einerseits der Anker in einer Buchse hochpräzise und beispielsweise gedämpft gelagert wird und gleichzeitig das Betätigungselement beziehungsweise der Ventilstift in Bezug auf den Ventilsitz und die Ventilbohrung präzise gelagert ist. Abweichungen beziehungsweise Fertigungstoleranzen, die in der Verbindung der Buchse mit dem Ventilkörper liegen, werden auf diese Weise nicht auf das Dichtelement und den Ventilsitz übertragen, sodass eine erhöhte Zuverlässigkeit und Dichtigkeit des Ventils erreicht wird.

Der Ventilstift wird bevorzugt in einer als Gleitlager ausgestalteten Längsbohrung des Ventilkörpers gelagert, sodass insbesondere radiale Abweichungen in Bezug auf die in dem Ventilsitz angeordnete Bohrung vermieden werden.

Es ist auf diese Weise außerdem möglich, den Anker in einer als Gleitlager ausgestalteten Buchse zu lagern, die gleichzeitig so ausgestaltet sein kann, dass eine Dämpfung des Ankers einstellbar ist. Es können auf diese Weise Druckstöße, die auf das Betätigungselement in Richtung des Ankers wirken, in der Ankerbuchse gedämpft und damit ein Aufschwingen des Systems vermieden werden.

Die Erfindung wird nachfolgend unter Bezugnahme auf die beigefügten Figuren eingehend erläutert.

Es zeigen:
- Figur 1: Einen Querschnitt eines erfindungsgemäßen Hochdruckregelventils,
- Figur 2: Eine vergrößerte Darstellung der Schnittstelle zwischen Anker und Ventilstift des Ventils aus Figur 1 und
- Figur 3: Eine Schnittdarstellung eines Hochdruckregelventils gemäß dem Stand der Technik (schon behandelt).

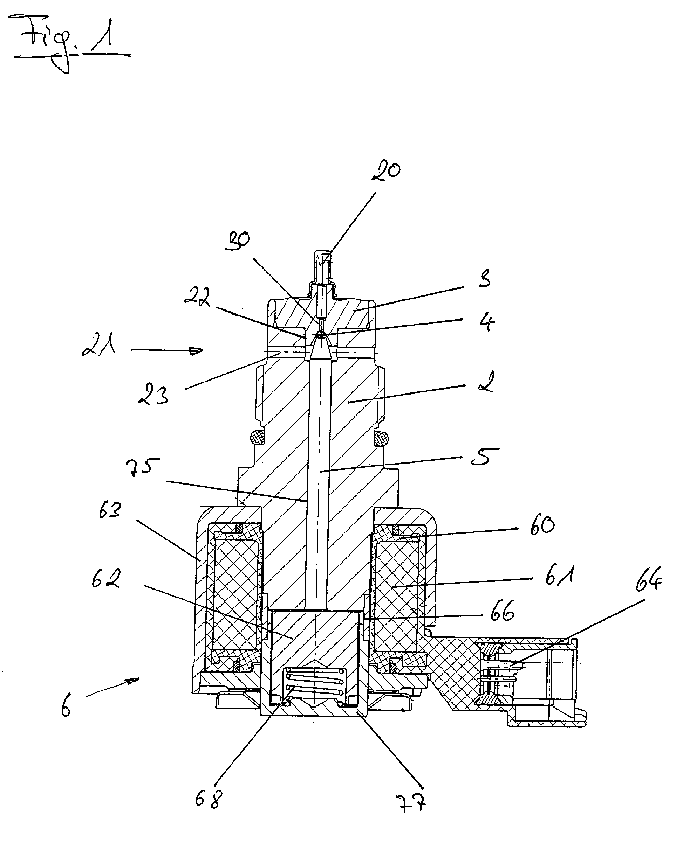

Figur 1 zeigt einen Querschnitt durch ein erfindungsgemäßes Hochdruckregelventil 1. Das Hochdruckregelventil 1 ist im Wesentlichen aus einem rotationssymmetrisch um eine Längsachse aufgebauten Ventilkörper 2 mit einem Einlass 20 sowie einem Auslass 21 aufgebaut. Zwischen dem Einlass 20 und dem Auslass 21 ist in den Ventilkörper 2 ein Ventilsitz 3 aus gehärtetem Stahl eingepresst, der eine Ventilbohrung 30 aufweist, die den Einlass 20 mit dem Auslass 21 verbindet. Der Auslass 21 ist im vorliegenden Beispiel durch radial verlaufende Bohrungen 23 in dem Ventilkörper 2 gebildet.

Ein auslassseitiges Ende der Ventilbohrung 30 ist durch ein Dichtmittel 4, das im vorliegenden Beispiel als Dichtkugel ausgestaltet ist, verschließbar. Eine Schließkraft auf die Dichtkugel 4 wird durch ein Betätigungselement 5, das im vorliegenden Beispiel als Ventilstift ausgestaltet ist, von einer rückseitig an dem Ventilkörper 2 angeordneten Betätigungseinheit 6, die im vorliegenden Beispiel als Elektromagnet ausgestaltet ist, übertragen. Der Ventilstift 5 ist in einer entlang der Längsachse des Ventilkörpers 2 verlaufenden und als Gleitlager 75 ausgestalteten Bohrung aufgenommen und gelagert. Eine Länge des Ventilstifts 5 ist derart bemessen, dass er rückseitig in eine Buchse 77, in der ein Anker 62 des Elektromagneten 68 gelagert ist, ragt. Die Buchse 77 ist mit dem Ventilkörper 2 über einen Schweißring 66 umlaufend verbunden. Der Anker 62 ist außerdem über eine Druckfeder 68 in Schließrichtung des Ventils mit einer Federkraft beaufschlagt, sodass das Ventil 1 bis zu einem durch die Federkraft der Druckfeder 68 bestimmten Druck in unbestromtem Zustand des Elektromagneten 6 geschlossen ist.

Der Elektromagnet 6 zur Betätigung des Ankers 62 ist aus einer den Ventilkörper 2 sowie die Buchse 77 umfänglich umgebenden Spule 61, die auf einem Spulenträger 60 angeordnet ist, gebildet. Der Spulenträger 60 und die Spule 61 sind gemeinsam in einem Gehäuse 63 aufgenommen, das mit dem Ventilkörper 2 verbunden ist. Übersteigt der einlassseitig anstehende Druck einer Flüssigkeit den durch die Federkraft der Druckfeder 68 vorgegebenen Maximaldruck, so ist es notwendig, die Spule 61 zusätzlich zu bestromen, sodass die Magnetkraft die Federkraft unterstützt und das Ventil 1 geschlossen hält. Eine Bestromung der Spule ist über seitlich nach außen geleitete Anschlusskontakte 64 möglich.

Bei einer Herstellung des Hochdruckregelventils 1 werden in der Regel der Ventilkörper 2 mit dem Gleitlager 75 und der Ventilsitz 3 mit der Ventilbohrung 30 in einem Arbeitsgang hergestellt, sodass diese Bauteile hochpräzise fluchtend und mit sehr geringen Fertigungstoleranzen hergestellt werden können. Ein in dem Gleitlager 75 aufgenommener Ventilstift 5 ist damit in Bezug auf die Ventilbohrung sehr präzise lagerbar, sodass eine radial versetzte Kraftkomponente auf die Dichtkugel 4 zum Verschließen des Hochdruckregelventils 1 nahezu ausgeschlossen werden kann.

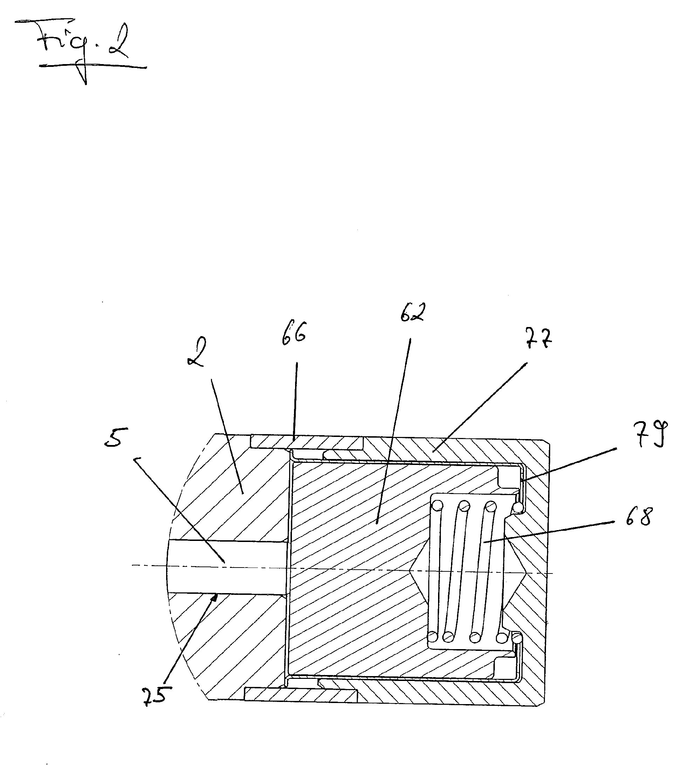

In Figur 2 ist die Aufnahme des Ankers 62 in der Buchse 77 sowie die Schnittstelle zu dem im Gleitlager 75 aufgenommenen Ventilstift 5 vergrößert dargestellt. Die Darstellung in Figur 2 ist im Vergleich zu Figur 1 um 90 Grad gegen den Uhrzeigersinn gedreht.

In dieser Darstellung ist besonders gut zu erkennen, dass der Anker 62 in der Buchse 77 über eine zusätzliche Lagerhülse 79 gelagert ist. Eine derartige Lagerung des Ankers 62 ist nur durch die Entkopplung zwischen dem Anker 62 und dem Ventilstift 5 möglich, da ansonsten beispielsweise Winkelabweichungen zwischen der Buchse 77 und dem Ventilkörper 2, die durch die Schweißung am Schweißring 66 entstehen können, auf den Ventilstift 5 übertragen würden. Es ist außerdem möglich, über die Lagerhülse 79 eine Dämpfung des Lagers 62 einzustellen, sodass Schwingungen des gesamten Systems, die sich auf den Fluidkreislauf übertragen können, reduziert werden.

### Bezugszeichen

- 1: Hochdruckregelventil
- 2: Ventilkörper
- 3: Ventilsitz
- 4: Dichtelement
- 5: Betätigungselement
- 6: Betätigungseinrichtung

- 20: Einlass
- 21: Auslass
- 22: Absatz
- 23: Öffnung/Bohrung

- 30: Ventilbohrung

- 60: Spulenträger
- 61: Spule
- 62: Anker
- 63: Gehäuse
- 64: Anschlusskontakte
- 66: Schweißung
- 68: Druckfeder
- 69: Lagerbuchse

- 71: Lager
- 73: Lager
- 75: Gleitlager
- 77: Buchse
- 79: Lagerhülse

## Patentansprüche

1. Hochdruckregelventil (1) mit
einem Ventilkörper (2) mit einem Einlass (20) und einem Auslass (21),
einem Dichtelement (4), das auf einen Ventilsitz (3), der an dem Ventilkörper (2) zwischen Einlass (20) und Auslass (21) angeordnet ist und eine Ventilbohrung (30) aufweist, wirkt, einem Betätigungselement (5), das entlang einer Längsachse beweglich gelagert und von einem Elektromagneten (6), der geeignet ausgebildet ist, betätigbar ist,
**dadurch gekennzeichnet, dass**
ein Anker (62) des Elektromagneten (6) und das Betätigungselement (5) als unverbundene separate Bauelemente ausgeführt sind.

2. Hochdruckregelventil(1) nach Anspruch 1,
**dadurch gekennzeichnet, dass**
das Betätigungselement (5) als Ventilstift ausgeführt ist.

3. Hochdruckregelventil (1) nach einem der vorhergehenden Ansprüche,
**dadurch gekennzeichnet, dass**
der Anker (62) und das Betätigungselement (5) separat gelagert sind.

4. Hochdruckregelventil (1) nach einem der vorhergehenden Ansprüche,
**dadurch gekennzeichnet, dass**
der Ventilstift (5) in einer als Gleitlager (75) ausgestalteten Längsbohrung des Ventilkörpers (2) gelagert ist.

5. Hochdruckregelventil (1) nach einem der vorhergehenden Ansprüche,
**dadurch gekennzeichnet, dass**
der Anker (62) in einer mit einem Gleitlager (79)ausgestalteten Buchse (77) gelagert ist.

6. Hochdruckregelventil (1) Anspruch 5,
**dadurch gekennzeichnet, dass**
das Gleitlager (79) derart ausgestaltet ist, dass eine Dämpfung des Ankers (62) einstellbar ist.
